# EUROPEAN PATENT SPECIFICATION

(11) **EP 1 518 147 B1**
(45) Date of publication and mention of the grant of the patent: **16.11.2005**
(21) Application number: 03735894.2
(22) Date of filing: 12.06.2003
(51) Int. Cl.: G02F 1/155

(54) **ELECTROCHROMIC DISPLAY PANEL WITH ELECTRODES FOR ADJUSTING CROSSTALK**
ELEKTROCHROME ANZEIGETAFEL MIT ELEKTRODEN ZUR EINSTELLUNG DES ÜBERSPRECHENS
PANNEAU D'AFFICHAGE ELECTROCHROMIQUE DOTE D'ELECTRODES DE CORRECTION DE DIAPHONIE

(30) Priority: 24.06.2002 EP 02254373
(43) Date of publication of application: 30.03.2005
(73) Proprietor: Koninklijke Philips Electronics N.V., 5621 BA Eindhoven (NL)
(72) Inventor: JOHNSON, Mark, T., NL-5656 AA Eindhoven (NL); YOUNG, Nigel, D., NL-5656 AA Eindhoven (NL)
(74) Representative: Rolfes, Johannes Gerardus Albertus
(86) International application number: PCT/IB2003/002628
(87) International publication number: WO 2004/001496

(56) References cited:
- US-A- 4 332 440
- US-A- 4 547 046
- PATENT ABSTRACTS OF JAPAN vol. 010, no. 022 (P-424), 28 January 1986 (1986-01-28) & JP 60 175035 A (MATSUSHITA DENKI SANGYO KK), 9 September 1985 (1985-09-09)

## Description

The invention relates to a display panel comprising
- a plurality of picture elements, each picture element having respective neighboring picture elements and comprising
   - a first electrode and a second electrode for the application of a potential difference between the first and the second electrode, and
   - electrochromic material
      - being present between the first electrode and the second electrode,
      - having an optical state, and
      - being able to receive an electrical charge, induced by the potential difference, which provides a change in the optical state, and
- crosstalk controlling means for adjusting first electrical currents between the picture elements and their respective neighboring picture elements.

An embodiment of the display panel of the type mentioned in the opening paragraph is known from US-A 5,444,330 and US 4 332 440 A, wich discloses the features of the preamble of claim 1.

In the known display panel the application of the potential difference between the first and the second electrode of a picture element induces an electrical current flowing between the electrodes. The electrical charge contained by the electrochromic material, induced by the electrical current, determines the color of the picture element. Color changes are provided by varying the electrical charge. Crosstalk is the full or partial coloring of the picture elements that are respective neighbors to the picture elements addressed. Crosstalk controlling means substantially eliminate currents between picture elements addressed and respective neighboring picture elements. As a result crosstalk is substantially eliminated. The crosstalk controlling means are formed by a structured ion-conductive layer, which is present between the first and the second electrodes of the picture elements. The structuring of the ion-conductive layer provides relatively nonconductive regions between the picture elements, resulting in relatively electrically isolated picture elements. This provides the substantial elimination of the currents between the picture elements addressed and the respective neighboring picture elements, resulting in the substantial elimination of crosstalk. The ion-conductive layer between picture elements is made relatively nonconductive by selective exposure of the ion-conductive layer between the picture elements to electromagnetic radiation to cause permanent change in the chemical composition of the ion-conductive layer. By the adjustment of the conductivity of the ion-conductive layer between picture elements, the crosstalk controlling means can be adjusted during the manufacturing process of the display panel. After the manufacturing of the display panel the crosstalk controlling means have become fixed and, in operation, crosstalk is substantially unadjustable. However, in certain applications, for instance smooth transitions in pictures, it may be desirable that, in operation, the crosstalk is substantially adjustable.

A drawback of the known display panel is that, in operation, the crosstalk is substantially unadjustable.

It is an object of the invention to provide a display panel of the kind mentioned in the opening paragraph which allows for the crosstalk to be substantially adjustable.

The object is achieved by the crosstalk controlling means comprising third electrodes between the picture elements and their respective neighboring picture elements for receiving first potentials to adjust the first electrical currents.

The invention is based on the insight that the first electrical currents between picture elements and neighboring picture elements are adjustable when third electrodes are present, by the application of potentials on the third electrodes. Therefore, crosstalk is adjusted by the application of first potentials to the crosstalk controlling means which more or less electrically decouple the picture elements from their respective neighboring picture elements. The first potentials depend on the potential differences between the first and the second electrodes and on the position and the dimensions of the third electrodes relative to the first and the second electrodes.

If the first and the third electrodes are present on a first substantially flat substrate, the position of the third electrodes is relatively well defined with respect to the first electrodes and the display panel can relatively easily be manufactured in a mass-production process. The first potentials on the third electrodes adjust the first electrical currents. If the first potentials are between the potentials of neighboring first electrodes, the third electrodes more or less act as electron sink of the first electrical currents resulting in an adjustable crosstalk. If, furthermore, a surface area of the third electrodes facing the first substrate is smaller than a surface area of the first electrodes facing the first substrate, the picture elements can be arranged close to each other for displaying high-resolution pictures. If the third electrodes surround the first electrodes, the adjustability of the first electrical currents is relatively large.

The adjustability of the first electrical current is relatively large if the second electrodes are present on a second substantially flat substrate, the first and the second electrodes being situated between the first and the second substrate, and the crosstalk controlling means further comprise fourth electrodes, present on one of the first and the second substrate and between the second electrodes, the fourth electrodes being able to receive second potentials to adjust the first electrical currents between the picture elements and their neighboring picture elements. The application of second potentials on the fourth electrodes adjusts the first electrical currents. The second potentials can independently be chosen with respect to the first potentials providing a higher degree of freedom to adjust the first electrical currents. If the first and the second potentials are in the range between the potentials of the first and the second electrodes, such that the potential difference between the first and the second potentials is substantially smaller than the potential difference present between the first and the second electrodes, crosstalk is substantially eliminated.

In a preferred embodiment at least one type of electrodes consisting of the first and the second electrodes are connected with switching elements for connecting the at least one type of electrodes to a driver providing the possibility of active matrix addressing. An example of a switching element is a thin film transistor, also known as TFT, but alternatively diodes and metal-insulator-metal devices, also known as MIM's, can be used as switching elements.

An adjustable crosstalk is provided by the application of potentials to the third electrodes that more or less electrically couple the picture elements with the neighboring picture elements. This provides the possibility to display sharp transitions in pictures with substantially eliminated crosstalk on the one hand, and smooth transitions in pictures, e.g. displaying some characters, being naturally supported by the crosstalk on the other hand. Therefore, in a preferred embodiment of the display panel further comprising switching means for adjusting the first potentials on the third electrodes, crosstalk can externally be adjusted by for instance the viewer. Making use of the switching means, the first potentials on the third electrodes are adjusted, providing the possibility to display pictures with sharp transitions as well as pictures with smooth transitions.

If the second electrodes of a number of picture elements are integral, the design of the display panel is relatively simple and the display panel can relatively easy be manufactured.

These and other aspects of the display panel of the invention will be further elucidated and described with reference to the drawings in which:
Figure 1 shows diagrammatically a front view of the display panel,
Figure 2 shows diagrammatically a cross sectional view along II-II in Figure 1,
Figure 3 shows diagrammatically a cross sectional view along III-III in Figure 2,
Figure 4 shows diagrammatically a cross sectional view similar to II-II in Figure 1,
Figure 5 shows diagrammatically an equivalent circuit diagram of a portion of the display panel,
Figure 6 shows diagrammatically a portion of an equivalent circuit diagram of a portion of the display panel, and
Figure 7 shows diagrammatically a portion of the display panel.

The Figures are schematic and not drawn to scale and in all the figures the same reference numerals refer to corresponding parts.

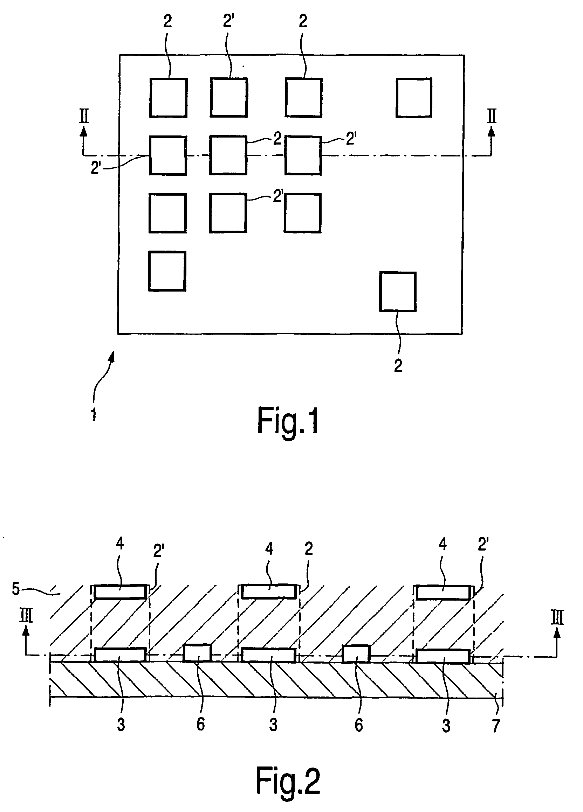

In Figure 1 the display panel 1 has picture elements 2. The picture elements 2 can for instance be arranged along substantially straight lines in a two-dimensional structure. For one picture element 2 the neighboring picture elements 2' are indicated.

In Figure 2 the display panel 1 comprises picture element 2 having neighboring picture elements 2'. Each picture element 2 comprises a first electrode 3 and a second electrode 4 between which a potential difference is applied. The second electrodes 4 of a number of picture elements 2 can be integral. Furthermore, electrochromic material 5 is present between first electrodes 3 and second electrodes 4. Preferably, the first electrodes 3 and/or the second electrodes 4 are transparent or are situated substantially out of the direct line of view to the display panel 1, to ensure that the change in optical state of the electrochromic material 5 is viewable. The electrochromic material 5 is for instance tungsten oxide or molybdenum oxide. Prior to the application of a potential difference between the first electrode 3 and the second electrode 4 the electrochromic material 5 is essentially non-absorbent and thus transparent. Without lack of generality, the potential of the second electrodes is chosen zero, because only potential differences between electrodes have physical meaning. If a potential of for instance -2 V is applied at the first electrodes 3 the electrical charge received by the electrochromic material 5 changes, resulting in a blue coloration of the previously transparent electrochromic material 5. The coloration can be removed, so-called bleaching, by reversing the voltage. An unstructured ion-conductive material can be present between the electrochromic material 5 and the second electrode 4, to make the coloration and bleaching process better controllable. Between the picture element 2 and neighboring picture elements 2' the crosstalk controlling means are formed by third electrodes 6. The third electrodes 6 adjust the first electrical currents between the picture element 2 and the neighboring picture elements 2'. At the first electrode 3 of picture element 2 for instance a voltage is applied of 2 V to make the picture element 2 transparent. The voltages applied at the first electrodes 3 of neighboring picture elements 2' are for instance voltages of -2 V to color the neighboring picture elements 2'. The voltages applied at the third electrodes 6 are for instance 0 V to substantially reduce crosstalk between picture element 2 and neighboring picture elements 2'.
Many dimensions and positions of third electrodes 6 are possible. In Figure 2 the surface area of the third electrodes 6 facing the first substrate 7 is smaller than the surface area of the first electrodes 3 facing the first substrate 7. Furthermore, the third electrodes 6 are present between the first electrodes 3 on the first substrate 7, but the third electrodes 6 may also be free from the first substrate 7.

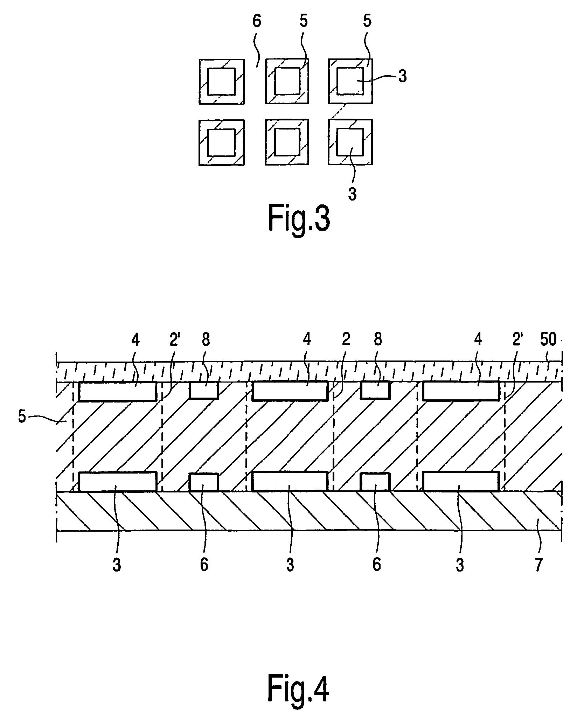

A preferred embodiment is shown in Figure 3 where furthermore the third electrode 6 surrounds the first electrode 3. In this configuration the adjustability of the first electrical currents is relatively large.

In Figure 4 the second electrodes 4 are present on the second substrate 50, with the first and the second electrodes 3,4 between the first and the second substrate 7,50. The crosstalk controlling means further comprise fourth electrodes 8 present on the second substrate 50 and between the second electrodes 4. The fourth electrodes 8 are able to receive second potentials to adjust the first electrical currents. By the application of first potentials on the third electrodes 6 and second potentials on the fourth electrodes 8, the potentials independently chosen, first electrical currents are adjusted. At the first electrode 3 of picture element 2 for instance a voltage is applied of 2 V to make the picture element 2 transparent. The voltages applied at the first electrodes 3 of neighboring picture elements 2' are for instance voltages of -2 V to color the neighboring picture elements 2'. The voltages applied to the third electrodes 6 are for instance 0 V and the voltages applied at the fourth electrodes S are for instance -0.5 V to substantially reduce crosstalk between picture element 2 and neighboring picture elements 2'.

Third electrodes 6 and fourth electrodes 8 may be constructed to partially surround the first electrode 3, for example in column and row directions, respectively. In this manner, third and fourth electrodes 6,8 can be used to independently adjust the degree of crosstalk in row and column directions, respectively.

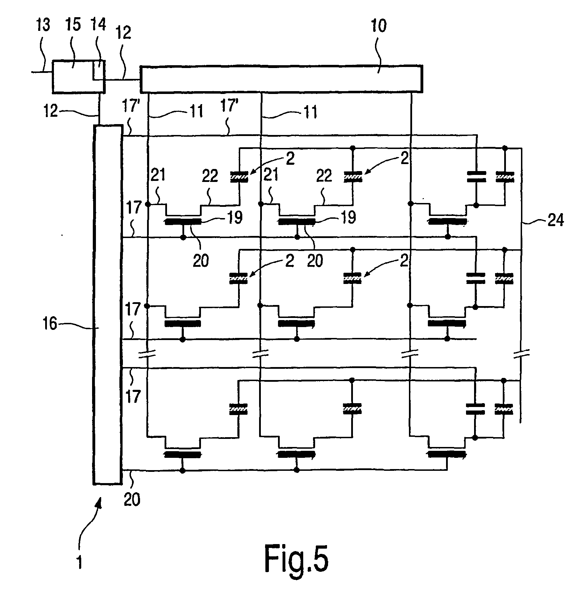

For displaying a picture on a display panel 1 having multiple picture elements 2 the optical state of each picture element 2 is set independent of the optical state of other picture elements 2, i.e. each picture element 2 is addressed independently. The potentials across the first electrodes 3 and the second electrodes 4 of picture elements 2 are determined by the drive mode. Figure 5 shows diagrammatically a display panel 1 which is driven with active switching elements 19, in this example thin film transistors. It comprises a matrix of picture elements 2 at the area of crossings of row electrodes 17 and column electrodes 11. The row electrodes 17 are consecutively selected by means of a row driver 16, while the column electrodes 11 are provided with data via a data register 10. If necessary, incoming data 13 is first processed in a processor 15. Mutual synchronization between the row driver 16 and the data register 10 takes place via drive lines 12. Drive signals from the row driver 16 select the picture elements 2 via thin film transistors 19 whose gate electrodes 20 are electrically connected to the row electrodes 17, and the source electrodes 21 are electrically connected to the column electrodes 11. The signal present at the column electrode 11 is transferred via the thin film transistor 19 to the picture element 2.

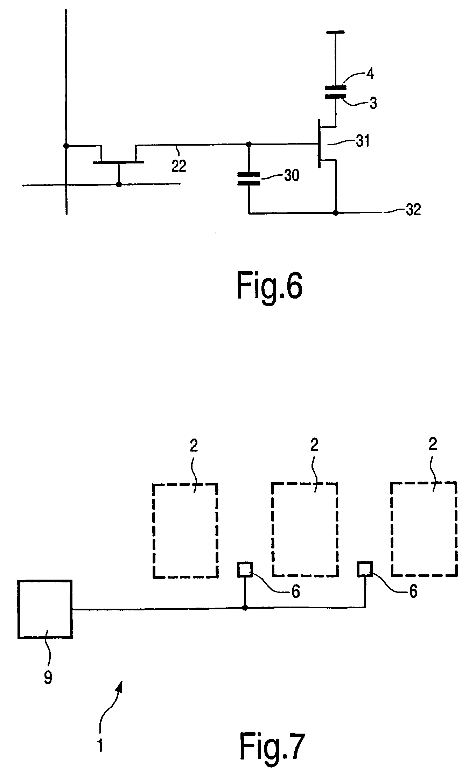

In general, additional switching means 31 and memory means 30 are present within the picture element circuit, coupled to the drain electrode 22 of TFT 19, as shown in Figure 6. In this case, the signal from the column electrode is used to either open or close the additional switching means 31. When switching means 31 is conducting, first electrode 3 is electrically connected to voltage supply 32. Memory means 30 ensures that switching means 31 remains in the same state until the following addressing period. These additional means ensure that the first electrode 3 is supplied with the required first signal during the hold period between successive addressing of the picture element 2. This ensures that the interval for the picture elements 2 of the display panel 1 to switch their optical state is relatively small. The second electrode 4 of the picture element 2 is connected to, for example one, or more, common electrodes 24.

In Figure 7 the switching means 9 are shown to adjust the first potentials applied to the third electrodes 6. In this way, for instance the viewer can adjust the crosstalk in the picture.

## Claims

1. A display panel comprising
- a plurality of picture elements, each picture element having respective neighboring picture elements and comprising
- a first electrode and a second electrode for the application of a potential difference between the first and the second electrode, and
- electrochromic material
- being present between the first electrode and the second electrode,
- having an optical state, and
- being able to receive an electrical charge, induced by the potential difference, which provides a change in the optical state, and
- crosstalk controlling means for adjusting first electrical currents between the picture elements and their respective neighboring picture elements,
**characterized by**
- the crosstalk controlling means comprising third electrodes between the picture elements and their respective neighboring picture elements for receiving first potentials to adjust the first electrical currents.

2. A display panel as claimed in claim 1 **characterized in that** the first and the third electrodes are present on a first substantially flat substrate.

3. A display panel as claimed in claim 2 **characterized in that** a surface area of the third electrodes facing the first substrate is smaller than a surface area of the first electrodes facing the first substrate.

4. A display panel as claimed in claim 3 **characterized in that** the third electrodes surround the first electrodes.

5. A display panel as claimed in claim 3 **characterized in that** the second electrodes are present on a second substantially flat substrate, the first and the second electrodes being situated between the first and the second substrate, and the crosstalk controlling means further comprise fourth electrodes, present on one of the first and the second substrate and between the second electrodes, the fourth electrodes being able to receive second potentials to adjust the first electrical currents between the picture elements and their neighboring picture elements.

6. A display panel as claimed in claim 1 to 3 **characterized in that** at least one type of electrodes consisting of the first and the second electrodes are connected with switching elements for connecting the at least one type of electrodes to a driver.

7. A display panel as claimed in claim 1 **characterized in** further comprising switching means for adjusting the first potentials on the third electrodes.

8. A display panel as claimed in claim 1 **characterized in that** the second electrodes of a number of picture elements are integral.

## Patentansprüche

1. Anzeigefeld, das Folgendes umfasst:
- eine Vielzahl von Bildelementen, wobei jedes Bildelement jeweilige benachbarte Bildelemente hat und Folgendes umfasst:
- eine erste Elektrode und eine zweite Elektrode zum Anlegen einer Potenzialdifferenz zwischen der ersten und der zweiten Elektrode, und
- elektrochromes Material,
- das sich zwischen der ersten und der zweiten Elektrode befindet,
- das einen optischen Zustand hat, und
- das in der Lage ist, eine, durch die Potenzialdifferenz induzierte, elektrische Ladung aufzunehmen, die eine Änderung in dem optischen Zustand schafft, und
- Mittel zur Kontrolle von Übersprechen zum Einstellen erster elektrischer Ströme zwischen den Bildelementen und ihren jeweiligen benachbarten Bildelementen,
**dadurch gekennzeichnet,**
- **dass** die Mittel zur Kontrolle von Übersprechen zwischen den Bildelementen und ihren jeweiligen benachbarten Bildelementen dritte Elektroden zur Aufnahme erster Potenziale zum Einstellen der ersten elektrischen Ströme umfassen.

2. Anzeigefeld nach Anspruch 1, **dadurch gekennzeichnet, dass** sich die ersten und die dritten Elektroden auf einem ersten im Wesentlichen flachen Substrat befinden.

3. Anzeigefeld nach Anspruch 2, **dadurch gekennzeichnet, dass** eine Oberfläche der dem ersten Substrat gegenüber liegenden dritten Elektroden kleiner ist als die Oberfläche der dem ersten Substrat gegenüber liegenden ersten Elektroden.

4. Anzeigefeld nach Anspruch 3, **dadurch gekennzeichnet, dass** die dritten Elektroden die ersten Elektroden umgeben.

5. Anzeigefeld nach Anspruch 3, **dadurch gekennzeichnet, dass** sich die zweiten Elektroden auf einem im Wesentlichen flachen zweiten Substrat befinden, wobei die ersten und die zweiten Elektroden zwischen dem ersten und dem zweiten Substrat liegen, und die Mittel zur Kontrolle von Übersprechen außerdem vierte Elektroden umfassen, die sich auf einem des ersten und des zweiten Substrats und zwischen den zweiten Elektroden befinden, wobei die vierten Elektroden in der Lage sind, zweite Potenziale aufzunehmen, um die ersten elektrischen Ströme zwischen den Bildelementen und ihren benachbarten Bildelementen einzustellen.

6. Anzeigefeld nach Anspruch 1 bis 3, **dadurch gekennzeichnet, dass** mindestens eine Art der aus den ersten und den zweiten Elektroden bestehenden Elektroden mit Schaltelementen zum Verbinden der mindestens einen Art von Elektroden mit einem Treiber verbunden ist.

7. Anzeigefeld nach Anspruch 1, **dadurch gekennzeichnet, dass** es außerdem Schaltmittel zum Einstellen der ersten Potenziale an den dritten Elektroden umfasst.

8. Anzeigefeld nach Anspruch 1, **dadurch gekennzeichnet**, das die zweiten Elektroden einer Anzahl von Bildelementen aus einem Stück sind.

## Revendications

1. Panneau d'affichage comprenant
- une pluralité d'éléments d'image, chaque élément d'image ayant des éléments d'image voisins respectifs et comprenant
- une première électrode et une deuxième électrode pour l'application d'une différence de potentiel entre la première et la deuxième électrode, et
- du matériau électrochromique
- qui est présent entre la première électrode et la deuxième électrode,
- qui présente un état optique, et
- qui est en état de recevoir une charge électrique étant induite par la différence de potentiel qui introduit un changement dans l'état optique, et
- des moyens de commande de diaphonie pour régler des premiers courants électriques entre les éléments d'image et leurs éléments d'image voisins respectifs,
**caractérisé par**
- les moyens de commande de diaphonie comprenant des troisièmes électrodes entre les éléments d'image et leurs éléments d'image voisins respectifs pour recevoir des premiers potentiels pour régler les premiers courants électriques.

2. Panneau d'affichage selon la revendication 1, **caractérisé en ce que** les premières et les troisièmes électrodes se situent sur un premier substrat sensiblement plat.

3. Panneau d'affichage selon la revendication 2, **caractérisé en ce qu'**une zone de surface des troisièmes électrodes qui se situe vis-à-vis du premier substrat est inférieure à une zone de surface des premières électrodes qui se situe vis-à-vis du premier substrat.

4. Panneau d'affichage selon la revendication 3, **caractérisé en ce que** les troisièmes électrodes entourent les premières électrodes.

5. Panneau d'affichage selon la revendication 3, **caractérisé en ce que** les deuxièmes électrodes se situent sur un deuxième substrat sensiblement plat, les premières et les deuxièmes électrodes étant situées entre le premier et le deuxième substrat, et **en ce que** les moyens de commande de diaphonie comprennent encore des quatrièmes électrodes qui se situent sur un du premier et du deuxième substrat et entre les deuxièmes électrodes, les quatrièmes électrodes étant en état de recevoir des deuxièmes potentiels pour régler les courants électriques entre les éléments d'image et leurs éléments d'image voisins.

6. Panneau d'affichage selon la revendication 1 à 3, **caractérisé en ce qu'**au moins un type d'électrodes qui est constitué des premières et des deuxièmes électrodes est connecté à des éléments de commutation pour connecter le au moins un type d'électrodes à un dispositif d'attaque.

7. Panneau d'affichage selon la revendication 1, **caractérisé en ce qu'**il comprend encore des moyens de commutation pour régler les premiers potentiels sur les troisièmes électrodes.

8. Panneau d'affichage selon la revendication 1, **caractérisé en ce que** les deuxièmes électrodes font corps avec un certain nombre d'éléments d'image.
